# EUROPEAN PATENT APPLICATION

(11) **EP 4 729 367 A1**
(43) Date of publication of application: **22.04.2026**
(21) Application number: 24207926.7
(22) Date of filing: 21.10.2024
(51) Int. Cl.: B60R 21/015

(54) **A REAR PASSENGER SAFETY SYSTEM**

(71) Applicant: Motherson Innovations Deutschland GmbH, 70327 Stuttgart (DE)
(72) Inventor: Tiwari, Debidutt, 201301 Noida (IN); Sathoo, Mohit, 201301 Noida (IN)

(57) **Abstract**

Embodiment of present disclosure relates to a rear passenger safety system 200 in a vehicle 100. The rear passenger safety system 200 comprises at least one camera 102, a storage unit 104, a rear passenger seat belt system 106, at least one front seat 108 and a control unit 112. The at least one camera 102 is configured to capture at least one image data. The storage unit 104 configured to receive the captured at least one image data. The rear passenger seat belt system 106 has a seat belt and a sensor, wherein the sensor is configured to sense unbuckling of the seat belt. Further, the control unit 112 is configured to show the captured at least one image data, on an at least one surface 110 of the front seat 108 based on a first input from the sensor.

## Description

The present disclosure relates to a lighting unit for a vehicle.

The present disclosure relates to a safety system in a vehicle. More particularly, the present disclosure relates to a safety system for a rear passenger in a vehicle.

Safety systems in vehicles are well known in the art. Further, with the increasing speeding capabilities of the vehicles, the need of safety systems is also ever increasing. Further, the existing safety systems include seat belts and air-bags. Further, a lot of developments have been done in field of bumpers to achieve better shock absorbing capabilities. Further, the vision system for driver have also been introduced for aiding driver of the vehicle. However, all the developments have been done in for front seat passenger and the driver. The rear seat passenger has only got seat belts as the safety system.

Further, the front seat passenger and the driver have access to the outer rear-view mirror to assist in getting out of the vehicle, whereas the rear seat passenger lacks access of the outer rear-view mirror to get assistance in getting out of the vehicle. This poses a huge risk for the rear seat passenger in getting out of the vehicle.

Therefore, there is a need to develop a safety system for the rear seat passenger which reduces the risk of any accident in getting out of the vehicle.

Hence, it is an object of the present disclosure to develop a safety system for a rear seat passenger. It is yet another object of the present disclosure to develop a safety system for a rear seat passenger which assists in getting out of a vehicle.

This object is solved by a rear passenger safety system in a vehicle of claim 1. Claims 2-15 describe embodiments of the rear passenger safety system.

The present disclosure relates to a rear passenger safety system in a vehicle. The rear passenger safety system comprising: at least one camera mounted on an exterior of the vehicle, wherein the at least one camera is configured to capture at least one image data; a storage unit configured to receive the captured at least one image data; a rear passenger seat belt system comprising a seat belt and a sensor, wherein the sensor is configured to sense at least unbuckling of the seat belt, and at least one front seat having at least one surface configured to show the at least one image data, a control unit configured to receive a first input from the sensor, wherein the control unit is configured to show the captured at least one image data, on the at least one surface of the front seat, based on the first input from the sensor.

In an embodiment of the present disclosure, the at least one surface of the front seat faces a rear seat of the vehicle.

In an embodiment of the present disclosure, the rear passenger safety system also comprises a display device attached to the at least a portion of at least one surface of the front seat, wherein the display device is configured to receive a first signal from the control unit to show the captured at least one image data stored in the storage unit.

In an embodiment of the present disclosure, the rear passenger safety system also comprises a projection system mounted inside the vehicle, wherein the projection system is configured to receive a first signal from the control unit to project the captured at least one image data on the at least one surface of the front seat.

In an embodiment of the present disclosure, the projection system is mounted on the ceiling of the vehicle.

In an embodiment of the present disclosure, the sensor is configured to sense buckling of the seat belt, and the control unit is configured, to receive a second input from the sensor, to stop showing the captured at least one image data on the at least one surface of the front seat.

In an embodiment of the present disclosure, the at least one camera is mounted on an outer-rear view mirror.

In an embodiment of the present disclosure, the rear passenger safety system comprises a first camera, mounted on the exterior towards left side of the vehicle, configured to capture a first image data. The rear passenger safety system also comprises a second camera, mounted on the exterior towards right side of the vehicle, configured to capture a second image data.

In an embodiment of the present disclosure, the rear passenger safety system comprises a left front seat having a left rear surface, wherein the left rear surface is configured to show at least one of the captured first image data and the captured second image data in an event of unbuckling of the seat belt. The rear passenger safety system also comprises a right front seat having a right rear surface, wherein the right rear surface is configured to show the at least one of the first image data and the second image data in the event of unbuckling of the seat belt.

In an embodiment of the present disclosure, the rear passenger safety system comprises a first display device attached to the left rear surface and a second display device attached to the right rear surface. Further, each of the first display device and the second display device is configured to receive the first signal from the control unit to show at least one of the captured first image data and the captured second image data.

In an embodiment of the present disclosure, the first display device and the second display device are configured to receive the first signal from the control unit to show the captured first image data and the captured second image data, correspondingly.

In an embodiment of the present disclosure, the projection system comprises a first projector and a second projector. The first projector, on receiving the first signal from the control unit, projects the at least one of the captured first image data and the captured second image data on the left rear surface. The second projector, on receiving the first signal from the control unit, projects the at least one of the captured first image data and the captured second image data on the right rear surface.

In an embodiment of the present disclosure, the first projector projects the captured first image data on the left rear surface, and the second projector projects the captured second image data on the right rear surface.

In an embodiment of the present disclosure, the first camera is mounted on a left outer-rear view mirror, and the second camera is mounted on a right outer-rear view mirror.

In an embodiment of the present disclosure, the control unit is configured, to receive the second input from the sensor, to stop showing at least one of the captured first image data and the captured second image data on at least one of the left rear surface and the right rear surface.

Other aspects, advantages, and salient features of the present disclosure will become apparent to those skilled in the art from the following detailed description, which taken in conjunction with the annexed drawings, discloses exemplary embodiments of the disclosure, wherein:
Fig. 1 illustrates a rear passenger system according to an embodiment of the present disclosure.
Fig. 2 illustrates a rear passenger system according to another embodiment of the present disclosure.
Fig. 3 illustrates a first camera and a second camera of a vehicle according to an embodiment of the present disclosure.
Fig. 4 illustrates a left front seat and a right front seat of the vehicle according to an embodiment of the present disclosure.
Fig. 5 illustrates a left rear surface and a right rear surface of the vehicle according to an embodiment of the present disclosure.
Fig. 6 illustrates a first display device and a second display device of the vehicle according to an embodiment of the present disclosure.
Fig. 7 illustrates a first projector and a second projector of the vehicle according to an embodiment of the present disclosure.

The drawings referred to in this description are not to be understood as being drawn to scale except if specifically noted, and such drawings are only exemplary in nature.

The foregoing objects, features and advantages of the present disclosure will become more apparent from the following detailed description related to the accompanying drawings. However, various modifications may be applied to the present disclosure, and the present disclosure may have various embodiments of the present disclosure. Hereinafter, specific embodiments of the present disclosure, which are illustrated in the drawings, will be described in detail.

In the following description, for purposes of explanation, numerous specific details are set forth in order to provide a thorough understanding of the present disclosure. It will be apparent, however, to one skilled in the art that the present disclosure can be practiced without these specific details. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

Reference in this specification to "one embodiment" or "an embodiment" means that a particular feature, structure, or characteristic described in connection with the embodiment is included in at least one embodiment of the present disclosure. The appearances of the phrase "in an embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not for other embodiments.

Moreover, although the following description contains many specifics for the purposes of illustration, anyone skilled in the art will appreciate that many variations and/or alterations to said details are within the scope of the present disclosure. Similarly, although many of the features of the present disclosure are described in terms of each other, or in conjunction with each other, one skilled in the art will appreciate that many of these features can be provided independently of other features. Accordingly, this description of the present disclosure is set forth without any loss of generality to, and without imposing limitations upon, the present disclosure.

In the drawings, the thicknesses of layers and regions may be exaggerated for clarity. When it is indicated that an element or layer is "on" or "above" another element or layer, this comprises a case in which another layer or element is interposed therebetween as well as a case in which the element or layer is directly above the other element or layer. In principle, reference signs designate elements throughout the specification. In the following description, like reference signs are used to designate elements, which have the same function within the same idea illustrated in the drawings of each embodiment of the present disclosure.

When detailed description of known functions or configurations related to the present disclosure is deemed to unnecessarily blur the gist of the disclosure, the detailed description thereof will be omitted. Also, numerals e.g., first, second, etc. used in the description herein are merely identifiers for distinguishing one element from another element.

In addition, the terms "module" and "unit" used to refer to elements in the following description are given or used in combination only in consideration of ease of writing the specification, and the terms themselves do not have distinct meanings or roles.

Furthermore, the use of a singular term, such as, "a" is not to be interpreted as limiting the number of components or details of particular components. Additionally, various terms and/or phrases describing or indicating a position or directional reference such as, but not limited to, "top", "bottom", "front", "rear", "forward", "rearward", "end", "outer", "inner", "left", "right", "vertical", "horizontal", etc. may relate to one or more particular components as seen generally from a user's vantage point during use or operation, and such terms and/or phrases are not to be interpreted as limiting, but merely as a representative basis for describing the disclosure to one skilled in the art. In addition, a suffix "region", "part", "unit" for a component used in the following description are given or mixed in consideration of only the ease of writing the specification, and do not have meanings or roles distinguished from each other.

While the present invention is illustrated in the context of a four-wheeled vehicle, however, holding structure and aspects and features thereof can be used with other types of vehicles such as a two-wheeled vehicle, three-wheeled vehicle, six-wheeled vehicle, eight-wheeled vehicle, etc. as well. In illustrated embodiments, it is to be noted that terms such as "four-wheeled vehicle" and "vehicle" are interchangeably used throughout the description.

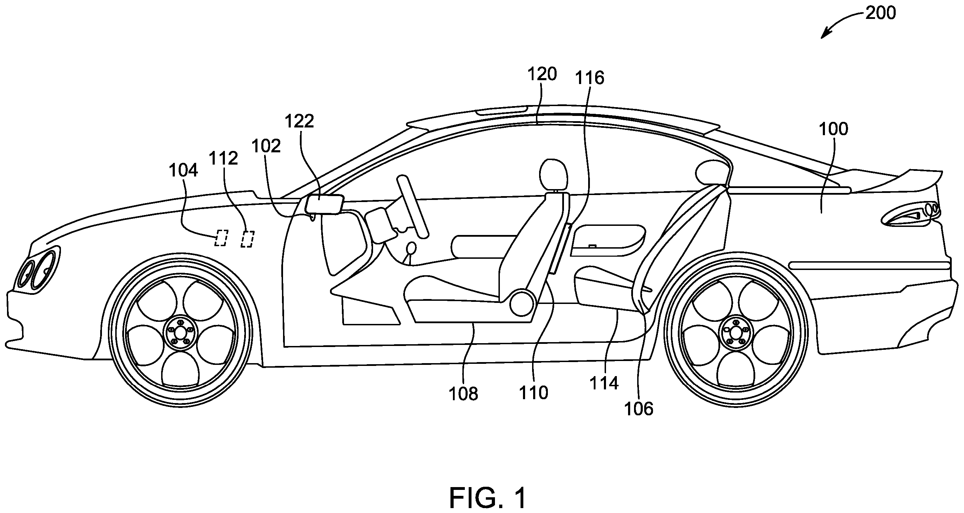

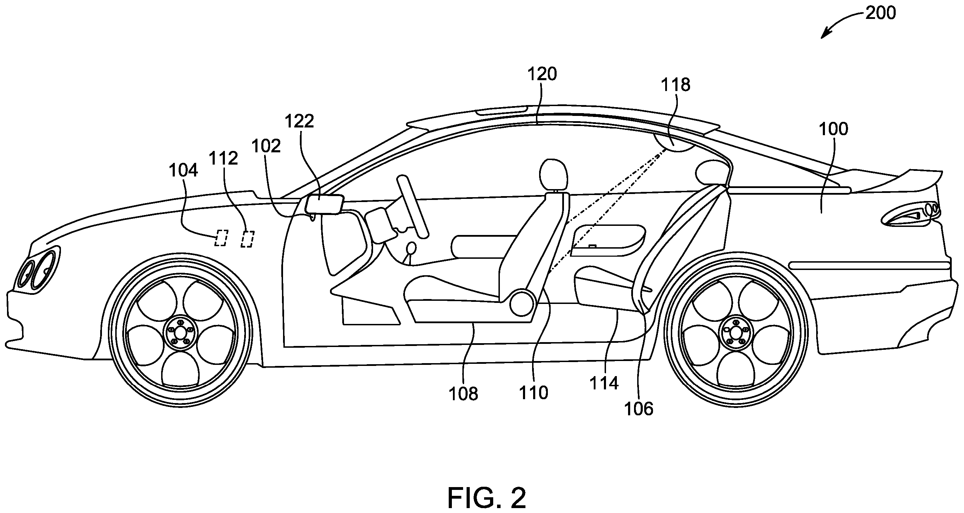

Figs. 1-2 illustrate a rear passenger system 200 in a vehicle 100. The rear passenger system 200 encompasses at least one camera 102, a storage unit 104, a rear passenger seat belt system 106, at least one front seat 108 and a control unit 112.

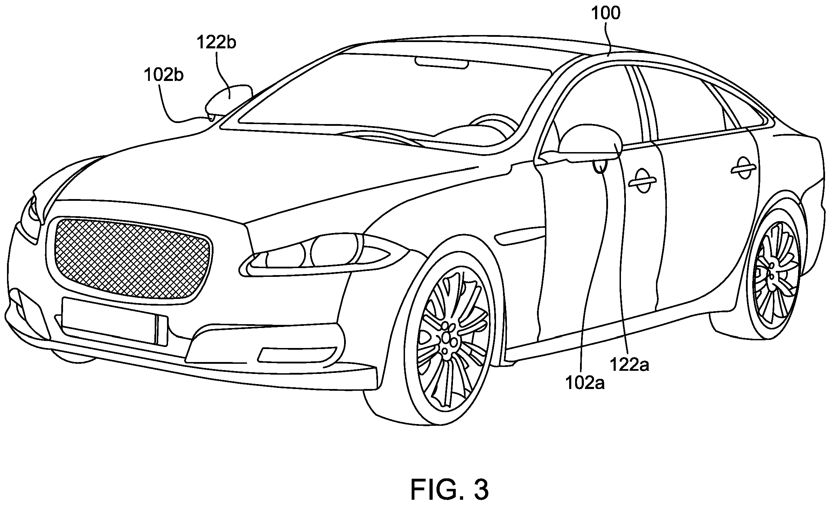

The at least one camera 102 may be a conventionally known image capturing device. The at least one camera 102 may be configured to capture at least image data. The at least one camera 102 may be attached to an exterior of the vehicle. In an embodiment, the at least one camera 102 may be attached to an outer-rear view mirror 122. In yet another embodiment, the at least one camera 102 may be attached to an antenna of the vehicle 100. In yet another embodiment as shown in Fig. 3, the vehicle 100 comprises a first camera 102a and a second camera 102b. The first camera 102a may be mounted on the exterior towards left side of the vehicle 100. The second camera 102b may be mounted on the exterior towards right side of the vehicle 100. The first camera 102a may be configured to capture a first image data. The second camera 102b may be configured to capture a second image data. In an embodiment, the first camera 102a may be attached to a left outer-rear view mirror 122a, and the second camera 102b may be attached to a right outer-rear view mirror 112b.

The storage unit 104 may be configured to receive the captured at least one image data. The storage unit 104 may be configured to receive and store the captured at least one image data. In an embodiment, the storage unit 104 may be configured to receive and store the captured the first image data and the second image data. The storage unit 104 may be also configured to store additional data. Further, the storage unit 104 may be placed inside the vehicle. Furthermore, the storage unit 104 may be a conventionally known storage unit known a person skilled in the art.

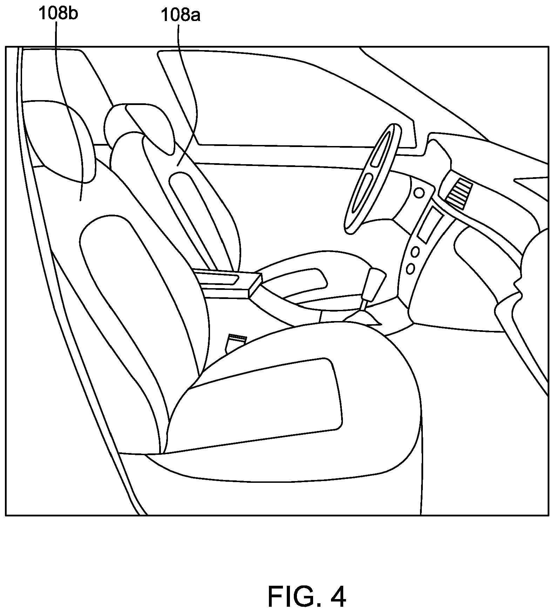

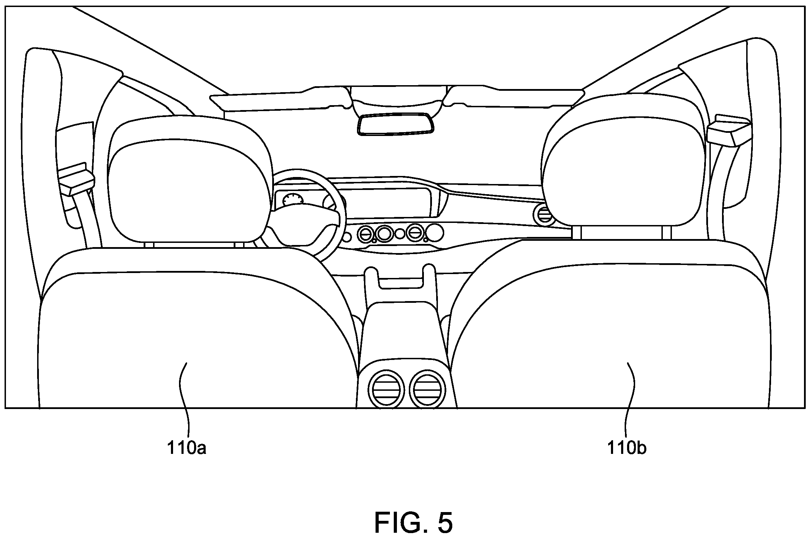

Further, as shown in Figs. 1-2 and 4, the at least front seat 108 may be a driver seat or a co-driver seat. The at least front seat 108 may have at least one surface 110. The at least one surface 110 may face a rear seat 114 of the vehicle 200. In an embodiment as shown in Fig. 4, the system 200 may have a left front seat 108a and a right front seat 108b. In an embodiment, the left front seat 108a may be the driver seat. In another embodiment, the left front seat 108 may be the co-driver seat. As shown in Figs 4-5, the left front seat 108a may have a left rear surface 110a, and the right front seat 108b may have a right rear surface 110b. The left rear surface 110a and the right rear surface 110b may face the rear seat 114 of the vehicle 100.

The rear passenger seat belt system 106 may be configured on the rear seat 114 of the vehicle 100. The rear passenger seat belt system 106 encompasses a seat belt and a sensor. The seat belt may be a conventional seat belt known to person skilled in the art. The sensor may be configured to sense buckling and unbuckling of the seat belt. In an embodiment, the sensor may be placed on the seat belt. In another embodiment, the sensor may be placed on a seat belt buckle. In another embodiment, the sensor may be placed on combination of the seat belt and the seat buckle. In yet another embodiment, the sensor may be a reed switch. Furthermore, the sensor may be configured to communicate with the control unit 112 through a wire or wirelessly. The sensor may be configured to send a first input to the control unit 112, wherein the first input relates to unbuckling of the seat belt. The sensor may be configured to send a second input to the control unit 112, wherein the second input relates to buckling of the seat belt.

The control unit 112 may be configured to receive the first input and the second input from the sensor. The control unit 112 may be a processor or an electronic control system. In an embodiment, the control unit 112 may be an electronic control unit of the vehicle 100. In an embodiment, the control unit 112 may be located in the vehicle 100. The control unit 112 may be configured to send a first signal and a second signal. The control unit 112 may be configured to send the first signal on reception of the first input. The control unit 112 may be configured to send the second signal on reception of the second input.

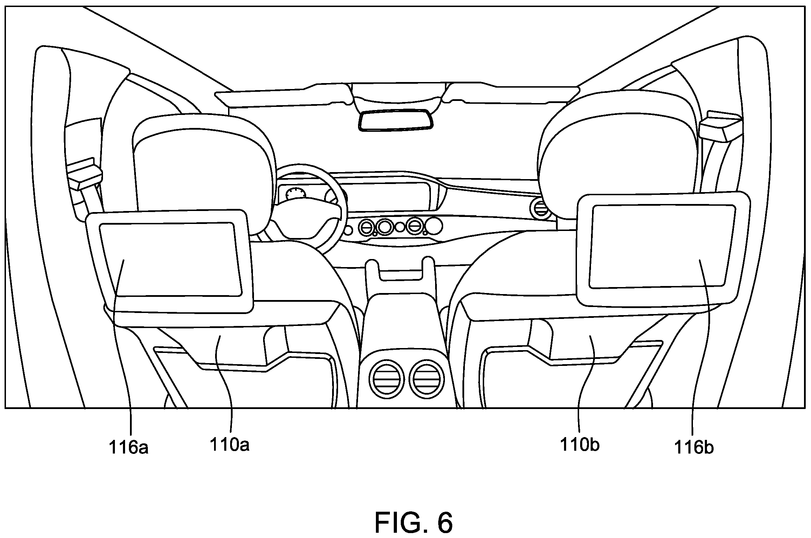

In an embodiment, the storage unit 104 may be configured to relay a data to a display device 116. The display device 116 may be a conventionally known display device known to a person skilled in the art. The display device 116 may be a LED screen or a LCD screen. The display device 116 may be configured to receive the first signal from the control unit 112 to exhibit the captured at least one image data. The display device 116 may also be configured to receive the second signal from the control unit 112 to stop exhibiting the captured at least one image data. The display device 116 may be attached to at least a portion of the at least one surface 110 of the front seat 108. In an embodiment as shown in Fig. 6, the system 200 comprises a first display device 116a attached to the left rear surface 110a, and a second display device 116b attached to the right rear surface 110b. In an embodiment, each of the first display device 116a and the second display device 116b may be configured to receive the first signal from the control unit 112 to show at least one of the captured first image data and the captured second image data. In embodiment, each of the first display device 116a and the second display device 116b may be configured to receive the first signal from the control unit 112 to show both the captured first image data and the captured second image data. In yet another embodiment, each of the first display device 116a and the second display device 116b may be configured to receive the first signal from the control unit 112 to show the captured first image data and the captured second image data, correspondingly.

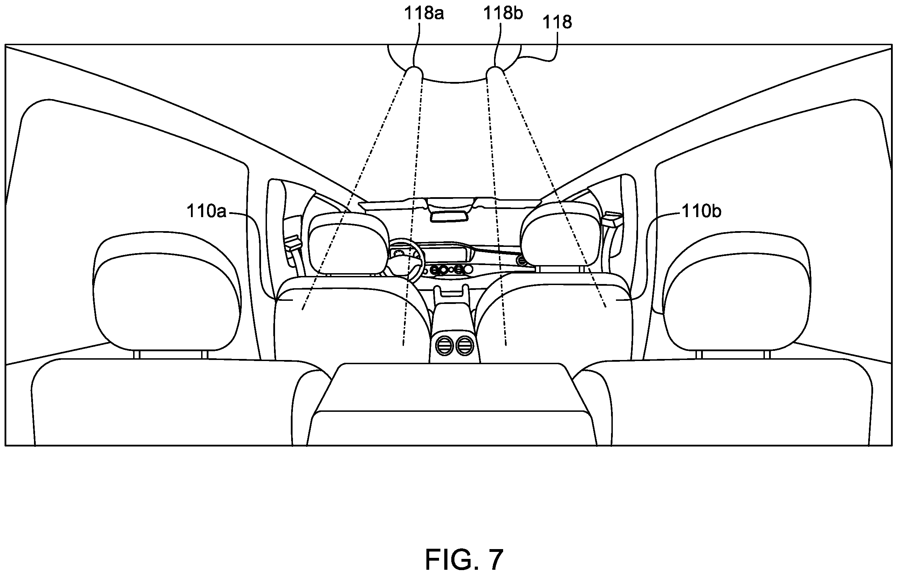

In an embodiment, the storage unit 104 may be configured to relay a data to a projection system 118 mounted inside the vehicle 100. In an embodiment, the projection system 118 may be mounted on a ceiling 120 of the vehicle 100. The projection system 118 may be a conventionally know projection system known to person skilled in the art. In an embodiment the projection system 118 may be a projector. The projection system 118 may be configured to receive the first signal from the control unit 112 to project the captured at least one image data on the at least one surface 110. The projection system 118 may be configured to receive the second signal from the control unit 112 to stop projecting the captured at least one image data on the at least one surface 110. In an embodiment as shown in Fig. 7, the projection system 118 comprises a first projector 118a and a second projector 118b. In an embodiment, the first projector 118a on receiving the first signal from the control unit 112 may project the at least one of the captured first image data and the captured second image data on the left rear surface 110a. The second projector 118b on receiving the first signal from the control unit 112 may project the at least one of the captured first image data and the captured second image data on the right rear surface 110b. In yet another embodiment, the first projector 118a may project the captured first image data on the left rear surface 110a, and the second projector 118b may project the captured second image data on the right rear surface 110b.

Embodiment 1: A rear passenger safety system 200 in a vehicle 100, the rear passenger safety system 200 comprising: at least one camera 102 mounted on an exterior of the vehicle 100, wherein the at least one camera 102 is configured to capture at least one image data; a storage unit 104 configured to receive the captured at least one image data; a rear passenger seat belt system 106 comprising a seat belt and a sensor, wherein the sensor is configured to sense at least unbuckling of the seat belt, and at least one front seat 108 having at least one surface 110 configured to show the captured at least one image data, a control unit 112 configured to receive a first input from the sensor, wherein the control unit 112 is configured to show the captured at least one image data, on the at least one surface 110 of the front seat 108, based on the first input from the sensor.

Embodiment 2: The at least one surface 110 of the front seat 108 faces a rear seat 114 of the vehicle 200.

Embodiment 3: The rear passenger safety system 200 further comprises a display device attached to at least a portion of the at least one surface of the front seat, wherein the display device is configured to receive a first signal from the control unit to show the captured at least one image data stored in the storage unit.

Embodiment 4: The rear passenger safety system 200 further comprises a projection system 118 mounted inside the vehicle 100, wherein the projection system 118 is configured to receive a first signal from the control unit 112 to project the captured at least one image data on the at least one surface of the front seat.

Embodiment 5: The projection system 118 is mounted on a ceiling 120 of the vehicle 100.

Embodiment 6: The sensor is configured to sense buckling of the seat belt, and the control unit 112 is configured, to receive a second input from the sensor, to stop showing the captured at least one image data on the at least one surface 110 of the front seat 108.

Embodiment 7: The at least one camera 102 is mounted on an outer-rear view mirror 122.

Embodiment 8: The rear passenger safety system 200 comprises a first camera 102a, mounted on the exterior towards left side of the vehicle 100, configured to capture a first image data, and a second camera 102b, mounted on the exterior towards right side of the vehicle, 100 configured to capture a second image data.

Embodiment 9: The rear passenger safety system 200 comprises a left front seat 108a having a left rear surface 110a, wherein the left rear surface 110a is configured to show at least one of the captured first image data and the captured second image data in an event of unbuckling of the seat belt, and a right front seat 108b having a right rear surface 110b, wherein the right rear surface 110b is configured to show the at least one of the first image data and the second image data in the event of unbuckling of the seat belt.

Embodiment 10: The rear passenger safety system 200 comprises a first display device 116a attached to the left rear surface 110a and a second display device 116b attached to the right rear surface 110b, wherein each of the first display device 116a and the second display device 116b is configured to receive the first signal from the control unit 112 to show at least one of the captured first image data and the captured second image data.

Embodiment 11: The first display device 116a and the second display device 116b is configured to receive the signal from the control unit 112 to show the captured first image data and the captured second image data, correspondingly.

Embodiment 12: The projection system 118 comprises a first projector 118a and a second projector 118b, wherein the first projector 118a, on receiving the first signal from the control unit 112, projects the at least one of the captured first image data and the captured second image data on the left rear surface 110a, and the second projector 118b, on receiving the first signal from the control unit 112, projects the at least one of the captured first image data and the captured second image data on the right rear surface 110b.

Embodiment 13: The first projector 118a projects the captured first image data on the left rear surface 110a, and the second projector 118b projects the captured second image data on the right rear surface 110b.

Embodiment 14: The first camera 102a is mounted on a left outer-rear view mirror 122a, and the second camera 102b is mounted on a right outer-rear view mirror 122b.

Embodiment 15: The control unit 112 is configured, to receive the second input from the sensor, to stop showing at least one of the captured first image data and the captured second image data on at least one of the left rear surface 110a and the right rear surface 110b.

Therefore, the present disclosure provides a safety system for a rear seat passenger. Further, the present disclosure provides a safety system for a rear seat passenger which assists in getting out of a vehicle.

Although the subject matter of the present disclosure has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims, i.e. the features disclosed in the foregoing description, the claims, and the drawings may be essential, both individually and in any combination, for accomplishing the present disclosure in its various embodiments. The embodiments shown herein are only examples of the present disclosure and must therefore not be understood as being restrictive. Alternative embodiments considered by the skilled person are equally covered by the scope of protection of the present disclosure.

### List of references

200 Rear passenger safety system
100 vehicle
102 camera
102a first camera
102b second camera
104 storage unit
106 rear passenger seat belt system
108 front seat
108a left front seat
108b right front seat
110 surface
110a left rear surface
110b right rear surface
112 control unit
114 rear seat
116 display device
116a first display device
116b second display device
118 projection system
118a first projector
118b second projector
120 ceiling
122 outer-rear view mirror
122a left outer-rear view mirror
122b right outer-rear view mirror

## Claims

1. A rear passenger safety system (200) in a vehicle (100), the rear passenger safety system (200) comprising:
at least one camera (102) mounted on an exterior of the vehicle (100), wherein the at least one camera (102) is configured to capture at least one image data;
a storage unit (104) configured to receive the captured at least one image data;
a rear passenger seat belt system (106) comprising a seat belt and a sensor, wherein the sensor is configured to sense at least unbuckling of the seat belt, and
at least one front seat (108) having at least one surface (110) configured to show the captured at least one image data,
a control unit (112) configured to receive a first input from the sensor, wherein the control unit (112) is configured to show the captured at least one image data, on the at least one surface (110) of the front seat (108), based on the first input from the sensor.

2. The rear passenger safety system (200) in accordance to the preceding claim, wherein the at least one surface (110) of the front seat (108) faces a rear seat (114) of the vehicle (200).

3. The rear passenger safety system (200) in accordance to any of the preceding claims, further comprises a display device (116) attached to at least a portion of the at least one surface (110) of the front seat (108), wherein the display device (116) is configured to receive a first signal from the control unit (112) to show the captured at least one image data stored in the storage unit (104).

4. The rear passenger safety system (200) in accordance to any of the preceding claims, further comprises a projection system (118) mounted inside the vehicle (100), wherein the projection system (118) is configured to receive a first signal from the control unit (112) to project the captured at least one image data on the at least one surface (110) of the front seat (108).

5. The rear passenger safety system (200) in accordance to any of the preceding claims, wherein the projection system (118) is mounted on a ceiling (120) of the vehicle (100).

6. The rear passenger safety system (200) in accordance to any of the preceding claims, wherein
the sensor is configured to sense buckling of the seat belt, and
the control unit (112) is configured, to receive a second input from the sensor, to stop showing the captured at least one image data on the at least one surface (110) of the front seat (108).

7. The rear passenger safety system (200) in accordance to any of the preceding claims, wherein the at least one camera (102) is mounted on an outer-rear view mirror (122).

8. The rear passenger safety system (200) in accordance any of the preceding claims, wherein the rear passenger safety system (200) comprises
a first camera (102a), mounted on the exterior towards left side of the vehicle (100), configured to capture a first image data, and
a second camera (102b), mounted on the exterior towards right side of the vehicle, (100) configured to capture a second image data.

9. The rear passenger safety system (200) in accordance to any of the preceding claims, wherein the rear passenger safety system (200) comprises
a left front seat (108a) having a left rear surface (110a), wherein the left rear surface (110a) is configured to show at least one of the captured first image data and the captured second image data in an event of unbuckling of the seat belt, and
a right front seat (108b) having a right rear surface (110b), wherein the right rear surface (110b) is configured to show the at least one of the first image data and the second image data in the event of unbuckling of the seat belt.

10. The rear passenger safety left system (200) in accordance to any of the preceding claims, wherein the rear passenger safety system (200) comprises a first display device (116a) attached to the left rear surface (110a) and a second display device (116b) attached to the right rear surface (110b),
wherein each of the first display device (116a) and the second display device (116b) is configured to receive the first signal from the control unit (112) to show at least one of the captured first image data and the captured second image data.

11. The rear passenger safety system (200) in accordance to any of the preceding claims, wherein the first display device (116a) and the second display device (116b) is configured to receive the signal from the control unit (112) to show the captured first image data and the captured second image data, correspondingly.

12. The rear passenger safety system (200) in accordance to any of the preceding claims, wherein the projection system (118) comprises a first projector (118a) and a second projector (118b), wherein
the first projector (118a), on receiving the first signal from the control unit (112), projects the at least one of the captured first image data and the captured second image data on the left rear surface (110a), and
the second projector (118b), on receiving the first signal from the control unit (112), projects the at least one of the captured first image data and the captured second image data on the right rear surface (110b).

13. The rear passenger safety system in accordance to any of the preceding claims, wherein the first projector (118a) projects the captured first image data on the left rear surface (110a), and the second projector (118b) projects the captured second image data on the right rear surface (110b).

14. The rear passenger safety system in accordance to any of the preceding claims, wherein the first camera (102a) is mounted on a left outer-rear view mirror (122a), and the second camera (102b) is mounted on a right outer-rear view mirror (122b).

15. The rear passenger safety system in accordance to any of the preceding claims, wherein the control unit (112) is configured, to receive the second input from the sensor, to stop showing at least one of the captured first image data and the captured second image data on at least one of the left rear surface (110a) and the right rear surface (110b).
